(19) 

Europäisches
Patentamt
European
Patent Office
Office européen
des brevets

(11) **EP 4 177 644 B1**

(12) **EUROPEAN PATENT SPECIFICATION**

(45) Date of publication and mention
of the grant of the patent:
**01.01.2025 Bulletin 2025/01**

(21) Application number: **21206647.6**

(22) Date of filing: **05.11.2021**

(51) International Patent Classification (IPC):
**G01V 20/00** (2024.01)       **G06N 5/01** (2023.01)
**G06N 20/20** (2019.01)

(52) Cooperative Patent Classification (CPC):
**G01V 20/00; G06N 5/01; G06N 20/20**

(54) **METHOD AND SYSTEM FOR DETERMINING GEOMECHANICAL PARAMETERS OF A WELL**

VERFAHREN UND SYSTEM ZUR BESTIMMUNG VON GEOMECHANISCHEN PARAMETERN
EINES BOHRLOCHS

PROCÉDÉ ET SYSTÈME PERMETTANT DE DÉTERMINER DES PARAMÈTRES
GÉOMÉCANIQUES D'UN PUITS

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**10.05.2023 Bulletin 2023/19**

(73) Proprietor: **MATRIX JVCO LTD trading as AIQ
Abu Dhabi (AE)**

(72) Inventors:
  • **NOUFAL, Abdelwahab
    Abu Dahbi (AE)**
  • **SREEKANTAN, Jaijith
    Abu Dahbi (AE)**

  • **BELMESKINE, Rachid
    Abu Dahbi (AE)**
  • **AMRI, Mohamed
    Abu Dahbi (AE)**
  • **BENAICHOUCHE, Abed
    Abu Dahbi (AE)**

(74) Representative: **Mader, Joachim
    Bardehle Pagenberg Partnerschaft mbB
    Patentanwälte, Rechtsanwälte
    Prinzregentenplatz 7
    81675 München (DE)**

(56) References cited:
  **WO-A1-2017/204879     WO-A1-2019/017962
  US-A1- 2007 294 034     US-A1- 2021 041 596**

EP 4 177 644 B1

Note: Within nine months of the publication of the mention of the grant of the European patent in the European Patent
Bulletin, any person may give notice to the European Patent Office of opposition to that patent, in accordance with the
Implementing Regulations. Notice of opposition shall not be deemed to have been filed until the opposition fee has been
paid. (Art. 99(1) European Patent Convention).

## Description

FIELD OF THE INVENTION

The present invention relates to a method and system for determining geomechanical parameters of a well.

BACKGROUND OF THE INVENTION

During the design phase for exploring new oil fields or developing new wells in an existing oil field there are two major aspects that must be addressed. At first, a realistic estimate of the expected mechanical behavior of the rocks and its potential response as a result of drilling needs to be developed, considering the geomechanical parameters of the rocks. Then an economic and safe well and support method for the determined rocks behavior needs to be designed. Geomechanics is the study of how rocks deform and fail in response to changes of stress, pressure, temperature, and other mechanical parameters imposed during a field development. It plays a critical role from quantifying drilling risks of exploration wells to maximizing production and recovery of difficult hydrocarbon resources and mature reservoirs.

The geomechanical parameters of a well are usually interpreted manually, depending on the experience of the person carrying out the interpretation. The results are usually impacted by inconsistencies due to biased or unexperienced interpreters.

International patent application WO 2020 065365 A1 describes a geomechanical method for calculating parameters such as overburden stress along a well trajectory to create log data. The log data contain plural curves, wherein a curve is a set of measurements or calculated property values due depth values. The method comprises the calibration of the curves which show anomalies using a machine learning algorithm. The machine learning algorithm is trained using parameter curves without anomalies from the concerning well or a comparable well. The machine learning algorithm creates a synthetic curve based on the curve containing the anomalies.

US patent application US 2019/266501 A1 describes a method for predicting mineralogical, textural, petrophysical and/or elastic target parameters at locations without rock samples based on well logs data. Elastic target parameters may be parameters such as P-wave velocity, S-wave velocity, or density. In addition to the well logs data, rock samples derived from rock sample locations are analyzed to obtain target parameter data measured from the rock samples. A machine learning algorithm is trained based on the well logs data and the target parameters measured from the rock samples. The machine learning algorithm is used to predict the target property at locations without rock samples for calibrating the created logs.

US 2021/041596 A1 discloses a method and system for modeling a subsurface region include applying a trained machine learning network to an initial petrophysical parameter estimate to predict a geologic prior model; and performing a petrophysical inversion with the geologic prior model, geophysical data, and geophysical parameters to generate a rock type probability model and an updated petrophysical parameter estimate.

US 2007/294034 A1 discloses a method for designing and optimizing drilling and completion operations in hydrocarbon reservoirs.

The prior art describes solutions for determining mechanical parameters using machine learning algorithms. The prior art, however, describe a system or method for determining geomechanical parameters of a well using machine learning algorithms while also considering porosity-based calculations.

SUMMARY OF THE INVENTION

The invention is defined by the appended independent claims. The dependent claims define advantageous embodiments. The present invention describes a system and computer-implemented method for determining elastic/mechanical parameters of a well. The accuracy of the determined parameters is increased by using a combination of geoscience-based models and machine learning algorithms.

According to a first aspect of the invention, the computer-implemented method for determining first final values of a first elastic (mechanical) parameter of a first well in a first rock structure comprises obtaining first input data from a database. The first input data is generated, at the first well, by at least one first tool module and comprises first well parameters of the first well. First intermediate values of the first geomechanical parameter of the first well are calculated using a first geoscience-based model and the first input data. First final values of the first geomechanical parameter of the first well are determined from the first intermediate values and the first input data using a first prediction model.

According to another aspect of the invention, the first prediction model is built using first machine learning algorithms and fourth input data. The fourth input data comprises geological and/or petrophysical parameters.

Obtaining the first input data comprises, according to the claimed invention, obtaining first intermediate input data from the database, wherein the first intermediate input data is generated, at the first well, by the at least one first tool module. The first intermediate input data comprise first intermediate well parameters of the first well. Missing data which is missing in the first intermediate input data, and which is necessary for calculating the first intermediate values and/or determining the first final values is identified. At least one second well is chosen from a plurality of wells stored in the database. Second input data for the second well is obtained from the database. The second input data is generated, at the at least one second well, by at least one tool module logs set and comprises second well parameters of the at least one second well. The first intermediate input data is merged with parts of the second input data that correspond to the missing data to gain the first input data with the first well parameters. The second well can be located in the first rock structure or in a second rock structure.

Choosing the at least one second well can consider at least one of the distances between the first well and the at least one second well, geological parameters of the first rock structure and of the second rock structure, the first well properties of the first well and the second well properties of the at least one second well.

According to another aspect of the invention, the method further comprises obtaining third input data from the database, wherein the third input data is generated, at the first well, by at least one third tool module. The third input data comprises third well parameters of the first well. First corrected final values of the first geomechanical parameter of the first well are determined from the first final values and the third input data.

According to another aspect of the invention, the method further calculates second intermediate values of a second geomechanical parameter of the first well using a second porosity-based model, the first input data and the first final values or the first corrected final values. Second final values of the second geomechanical parameter of the first well are determined from the second intermediate values and the first input data using a second prediction model.

The second prediction model can be built using second machine learning algorithms and fifth input data, the fifth input data comprising geological and/or petrophysical parameters.

The first well properties and the second well properties can be at least one of vertical depth, dog-legged severity, azimuth and below mudline depth along the well trajectory.

The first well parameters and the second well parameters are at least one of bulk density, caliper, resistivity, neutron porosity, compression slowness, shear slowness, young's modulus, compressive strength, Poisson ratio, fracture breakdown pressure and fracture closure pressure.

The first geomechanical parameter and the second geomechanical parameter of the first well can be one of overburden stress, pore pressure, fracture gradient, elastic properties, strength, and horizontal stresses.

The first input data and the second input data can be derived from one of well logs data generated during drilling and analysis of borehole cores.

The first machine learning algorithms and the second machine learning algorithms comprise regression algorithms.

Determining first corrected final values can comprise at least one of least square method as well as linear and nonlinear convex optimization.

The system for determining first final values of a first geomechanical parameter of a first well in a first rock structure comprises at least one first tool module and at least one second tool module. A database is configured to store first input data which is received from the at least one first tool module. The first input data comprises first well parameters of the first well. A data acquisition unit is configured to receive data from the database and to obtain the first input data from the database. A calculation unit is configured to receive data from the data acquisition unit and to calculate first intermediate values of the first geomechanical parameter of the first well using a first geoscience-based model and the first input data. An optimizer unit is configured to receive data from the data acquisition unit and from the calculation unit. The optimizer unit is further configured to build a first prediction model using first machine learning algorithms and fourth input data, wherein the fourth input data comprise geological and/or petrophysical parameters. The optimizer unit determines the first final values of the first geomechanical parameter of the first well from the first intermediate values and the first input data using the first prediction model.

## DESCRIPTION OF THE FIGURES

FIG. 1 shows a view of a first aspect of a system for determining geomechanical parameters of a well.
FIG. 2 shows a flow chart describing a first aspect of a method for determining geomechanical parameters of a well.

## DETAILED DESCRIPTION OF THE INVENTION

The invention will now be described based on the figures. It will be understood that the embodiments and aspects of the invention described herein are only examples and do not limit the protective scope of the claims in any way. The invention is defined by the claims and their equivalents. It will be understood that features of one aspect or embodiment of the invention can be combined with a feature of a different aspect or aspects and/or embodiments of the invention.

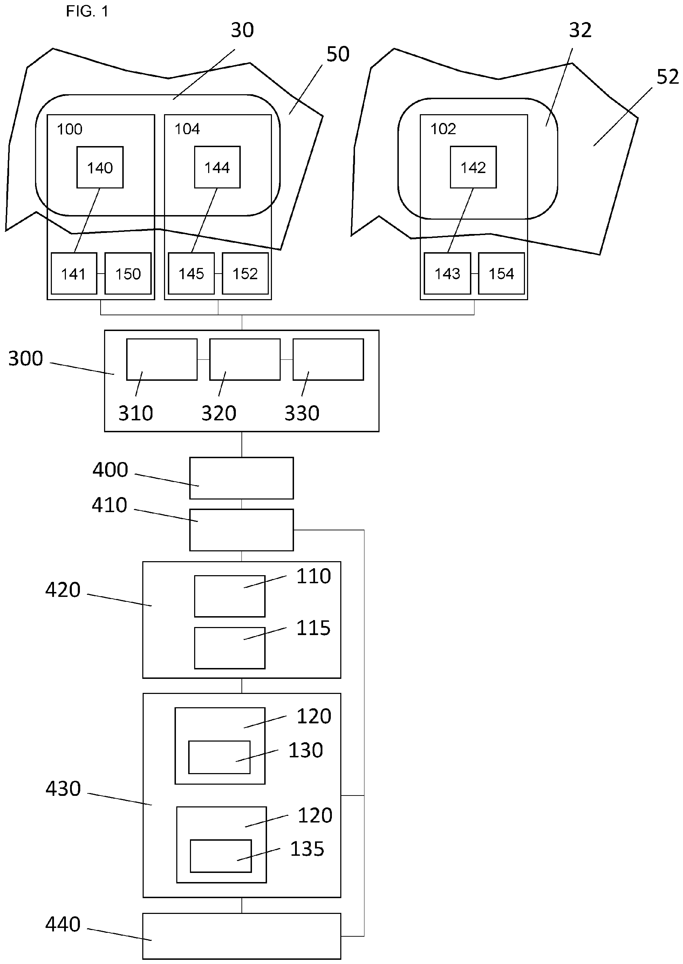

FIG. 1 shows a view of a first aspect of a system for determining a first geomechanical parameter 20 of a first well 30 in a first rock structure 50. A first tool module 100 can measure first well parameters 80 at the first well 30 and provide first input data 70 about the first well parameter 80 in conformity with the website information transfer standard markup language (WITSML). WITSML is an XML-based mark-up language and is described at https://www.energistics.org/portfolio/witsml-data-standards/. The WITSML standard is commonly known in the petroleum industry.

The first tool module 100 comprises a first measurement system 140 and a first WITSML server 141. The first measurement system 140 can for example be drilling instrumentation tools, such as, but not limited to composition of drill pipes with well logging devices, used during logging while drilling or measurement while drilling of the first well 30. The data generated by the first measurement system 140 are the first input data 70 and can be but are not limited to bulk density logs and a sonic logs. The bulk density log of the first well 30 is a record of the bulk density of the first rock structure 50 along the well trajectory due depth of the first well 30. The sonic logs include sonic compression and sonic shear along the well trajectory due depth of the first well 30. The data generated by the first measurement system 140 is sent to the first WITSML server 141 to perform depth time synchronization. Depth time synchronization comprises assigning a corresponding time to the recorded data points of the respective data to associate data from a certain point of depth with the time when the measurement of the data was performed.

The first tool module 100 provides the first input data 70, e.g., the bulk density logs and sonic logs to a database 400 or a data and quality control center 300. The first tool module 100 can alternatively or additionally measure further first well parameters 80 of the first well 30 such as, but not limited to, caliper, resistivity, neutron porosity, compression slowness, shear slowness, young's modulus, compressive strength, poisson ratio, fracture breakdown pressure and fracture closure pressure. The first tool module 100 can be a single tool module capable of measuring one type of the first well parameters 80 or measuring more than one type of the first well parameters 80. The first tool module 100 can alternatively be separate tool modules or a combination thereof, wherein the separate tool modules are able to measure different ones of the first well parameters 80.

A second tool module 102 can measure second well parameters 82 at a second well 32 in a second rock structure 52 and provide second input data 72 about the second well parameters 82 in conformity with the WITSML standard. The first well 30 and the second well 32 can alternatively be located in the same rock structure 50, 52. The second tool module-102 comprises a second measurement system 142 and a second WITSML server 143. The second measurement system 142 can for example be drilling instrumentation tools used during logging while drilling or measurement while drilling of the second well 32. The data generated by the second measurement system 142 are the second input data 72 and can be but are not limited to bulk density logs and a sonic logs. The bulk density log of the second well 32 is a record of the bulk density of the second rock structure 52 along the well trajectory due depth of the second well 33. The sonic logs include sonic compression and sonic shear along the depth of the second well 32. The data generated by the second measurement system 142 is sent to the second WITSML server 143 to perform depth time synchronization.

The second tool module 102 provides second the input data 72, e.g., the bulk density and sonic logs to the database 400 or the data and quality control center 300. The second tool module 102 can alternatively or additionally measure further second well parameters 82 of the second well 32 such as, but not limited to caliper, resistivity, neutron porosity, compression slowness, shear slowness, young's modulus, compressive strength, poisson ratio, fracture breakdown pressure and fracture closure pressure. The second tool module 102 can be a single tool module capable of measuring one type of second well parameters 82 or measuring more than one type of the second well parameters 82. The second tool module 102 can alternatively be separate tool modules or a combination thereof, wherein the separate tool modules are able to measure different ones of the second well parameters 82.

A third tool module 104 can measure third well parameters 84 at the first well 30 and provide third input data 74 about the third well parameters 84 in conformity with the WITSML standard. The third tool module 104 comprises a third measurement system 144 and a third WITSML server 145. The third measurement system 144 can for example be drilling instrumentation tools used during logging while drilling or measurement while drilling of the first well 30. The data generated by the third measurement system 144 are the third input data 74 and can be but are not limited to overburden pressure logs containing the overburden pressure along the well trajectory due depth of the first well 30. The data generated by the third measurement system 144 is sent to the third WITSML server 145 to perform depth time synchronization.

The third tool module 104 provides third input data 74, e.g., downhole test logs from downhole tests at specific depths in conformity with the WITSML standard to the database 400 or the data and quality control center 300. The third tool module 102 can alternatively or additionally measure further third well parameters 84 of the first well 30 such as, but not limited to pore pressure, fracture gradient, elastic properties, strength, and horizontal stresses.

The first tool module 100, the second tool module 102 and the third tool module 104 are collectively called "tool modules". Similarly, the first input data 70, the second input data 72 and the third input data 74 are collectively called "input data" and the first measurement system 140, the second measurement system 142 and the third measurement system 144 are collectively called "measurement systems". It will be appreciated that there may be more than three individual tool modules producing more than three sets of input data. It will be furthermore appreciated that the input data can be in other data formats such as but not limited to Las files, Dlis files, CSV files, txt files and Xlsx files.

The first tool module 100 can include a first data delivery system 150, the second tool module 102 can include a second data delivery system 152 and the third tool module 104 can include a third data delivery system 154 for providing the first input data 70, the second input data 72 and the third input data 74 to the database 400 for storing the input data or to the data and quality control center 300 for further processing of the input data. The first data delivery system 150, the second data delivery system 152 and the third data delivery system 154 perform buffering and redundancy checks with regards to the first input data 70, the second input data 72 and the third input data 74.

The data and quality control center 300 can process the input data received from the first tool module 100, the second tool module 102 and the third tool module 104tool modules before the input data is provided by the data and quality control center 300 to the database 400 for storing the input data. The input data can be transmitted from the first tool module 100, the second tool module 102 and the third tool module 104tool modules to the database 400 and/or the data and quality control center 300 using wireless communication such as, but not limited to, satellite communication or wired communication. The data and quality control center 300 can comprise a data parsing module 310, a data standardization module 320 and a data retrieval module 330.

The data parsing module 310 identifies the data format of the input data provided by the tool modules and parses the input data accordingly to retrieve the data in the format required for further processing. The data parsing module 310 includes separate modules for each data format.

The data standardization module 320 addresses data quality issues using rule-based, machine learning or statistic-based algorithms. The data standardization module 320 performs standardization with respect to channel labels, units, timestamps, error values, outliers, offsets and denoising.

The input data can comprise more than one data channel. A channel label is assigned to the data channels. The data standardization module 320 performs standardization of the channel labels. WITSML files may contain multiple redundant channels for the same measurement, wherein each of the channels is provided each with a different, human-readable, mnemonic as the channel label. A dictionary is created which defines the human readable channel labels (for instance "Compression_Slowness"), wherein lists of the mnemonics are associated to the channel labels (for instance [DTC, DTCS, DT]). The lists of the mnemonics define the order of importance according to which the mnemonics are selected. For example, if both DTC and DTCS are present in the dataset, the algorithm always associates DTC to Compression Slowness independently from the order in which the mnemonics appear during parsing. Once the one-to-one correspondence between the channels labels and the mnemonics is established, the selected channels are extracted and renamed accordingly.

The data standardization module 320 performs standardization of units. The units may be manually defined during the data generation. It is therefore common to find different ones of the units, or unit labels across different sets of the input data. The units for the compression slowness, for example, may be seconds, milliseconds, or microseconds, while the standard visualization and manipulation unit is microseconds. A dictionary is defined that associates a conversion factor for the units. After the appropriated correction factor is selected, value conversion is applied to the data in the channels to unify the units of the data in the channels.

The data standardization module 320 further performs standardization of timestamps. Timestamps are stored as strings which can appear in multiple formats, for example 11/10/2018 20:42:38 or 11-Oct-2018 20:42:38.0. It is possible to remove the values with seconds and Seconds sometimes cut these off from the timestamp, for example 11/10/2018 20:42. The timestamps are standardized by defining a list of allowed timestamp formats and of discarded formats. The timestamp is assigned to a unique index for the set of input data, if the timestamp belongs to one of the allowed formats.

The data standardization module 320 further performs standardization of error values. The measurement systems assign predefined error values in case reading and storage of measurements fails. Typical error values can be one of [-999, -999900, -9.99]. Erratic measurements which are not physically meaningful may also be recorded. The erratic measurements can either be negative or too large to be real values. A dictionary of minimum possible values and maximum possible values for each channel is defined to identify error values. The error values are replaced by a Null flag if they are detected.

The data standardization module 320 further performs standardization with respect to outliers. The outliers are identified based on the distribution of values for the channel. Sets of the input data can cover several months, given the long timespan of the drilling operations. The sets of the input data are therefore typically non-stationary. The statistics of the channel values therefore needs to be evaluated on a moving window of tunable length which can be between one day to one month depending on the features of the data. The detection of outliers is based on the Z-score method (as described in Ihab F. Ilyas, Xu Chu (2019), Data Cleaning, ACM Books), which eliminates those values that are further away than 3 standard deviations from the average value, if the values are normally distributed, or based on 5th and 95th percentile in case of significant deviation from normal distribution. The length of the moving window is defined by the rate of change of the trend of the set of input data. A window size of, for example, 24 hours is effective in removing outliers without affecting genuine measurements. The outliers are replaced by a Null flag if the outliers are detected.

The data standardization module 320 further performs standardization with respect to offsets. The offsets in data measurements refer to resets or drift in calibrations of the measurement devices. The offsets are more difficult to detect than the outliers since the expectable range of the values is not known a priori, neither is the expectable range of values constant in time. The piecewise median is computed on a moving window across a set of the input data without offsets to learn the normal median distribution in a first step. The piecewise median is computed on the input data and subsets of the input data are flagged by Null values if their piecewise median is outside the expectable range statistics in a second step.

The data standardization module 320 further performs standardization with respect to denoising. All the data from the measurement systems such as sensors comes with ambient white noise. The input data is parsed through denoising filters derived from signal processing such as median filters, low pass filters or band pass filters by learning the cutoff frequencies for each set of input data to retrieve useful information from the dataset.

The data retrieval module 330 of the data and quality control center 300 identifies and fills gaps in the input data to enable further processing of the data. Time sampling in WITSML data can be irregular although nominal sampling frequency of drilling data is constant and typically 1 or 5 seconds. It will be appreciated that significant portions of the input data can deviate from the nominal sampling frequency. The data must be resampled as most of machine learning algorithms used for further processing of the input data rely on uniform sampling frequency. The input data obtained from the data standardization module 320 cannot be readily resampled as the input data may contain (i) missing values from the data generation process, (ii) the null values introduced by the standardization module 320, and (iii) time gaps due to interruptions between the drilling operations. Those gaps with a length larger than a user defined parameter *MAX_TIME_GAP* are identified to address these issues. *MAX_TIME_GAP* is set to 60 seconds to prevent interpolation of long sequences of data and to reduce bias. The sets of the input data are split into subsets according to the selected gaps. The subsets are kept if the fraction of null values is lower than a parameter *NULL_RATIO* which can be defined depending on the quality of the data. *NULL_RATIO* can have values such as, but not limited to, 0.1, 0.2 or 0.3. The subsets are otherwise discarded if the fraction of null values is higher than *NULL_RATIO.* The subsets are resampled into a constant *RESAMPLING_RATE* and null values are linearly interpolated. *RESAMPLING_RATE* can have values such as, but not limited to, 0.1s or 1s. The data retrieval module 330 thus provides sets of the input data with constant time frequency and without null values. These sets of the input data are suitable to be used for further data processing.

The tool modules and/or the data and quality control center 300 can be permanently connected to the database 400 to transmit the input data. The tool modules and/or the data and quality control center 300 can alternatively or additionally be connected once or sporadically to the database 400 for transmitting data that is stored on the tool modules or within the data and quality control center 300 to the database 400. The connections between the tool modules and/or the data and quality control center 300 and the database 400 can be wireless connections and/or connections using cables. The tool modules and/or the data and quality control center 300 can be directly or indirectly connected to the database 400.

Fourth input data 76 and fifth input data 78 comprising geological and/or petrophysical parameters of the first rock structure 50 can also be processed in the data and quality control center 300 and/or be stored in the database 400. The fourth input data 76 can comprise parameters such as, but not limited to, predicted bulk density, sonic compression and sonic shear, neutron porosity and true vertical depth. The fifth input data 78 can comprise parameters such as but not limited to offset well pore pressure, predicted overburden stress, sonic compression and sonic shear, neutron porosity and true vertical depth.

The database 400 is further connected to a data acquisition unit 410. The data acquisition unit 410 can communicate with the database 400 and can obtain the first input data 70, the second input data 72, the third input data 74, the fourth input data 76 and the fifth input data 78 from the database 400.

The input data can miss parts of the data. For example, the first input data 70, the second input data 72 and/or the third input data 74 can be missing in parts or as a whole. Input data with missing parts is not suitable for use in the subsequent calculations. The data acquisition unit 410 can conduct data auditing and quality control to address this issue. The first input data 70 is referred to as first intermediate input data 71 if parts of the first input data 70 are missing or parts of the first input data 70 are not usable due to noise The first well parameters 80 are referred to as first intermediate well parameters 81 in this case. The data acquisition unit 410 identifies missing data 77 in the first intermediate input data 71. Data which is needed for subsequent data processing steps, and which is not included in the first intermediate input data 71 is classified as missing data 77. The data acquisition unit 410 chooses the second well 32 that is the most similar to the first well 30 and merges the parts of the second input data 72 from the second well 32 which are missing in the first intermediate input data 71 with the first intermediate input data 71. The merged data set is a complete set of the first input data 70.

The data acquisition unit 410 is further connected to a calculation unit 420. The calculation unit 420 can communicate with the data acquisition unit 410 and can receive the first input data 70 from the data acquisition unit 410.

The calculation unit 420 comprises a first porosity-based model 110, which models the relation between the first geomechanical parameter 20 and the first well parameters 80 for the first rock structure 50. The first porosity-based model 110 can, for example, be used to calculate the overburden stress along the well trajectory due depth of the first well 30 depending on the bulk density along the well trajectory due depth of the first well 30. The first porosity-based model 110 calculates the overburden stress for a certain depth by integrating the bulk density of the first rock structure 50 overlying the depth of interest. The first porosity-based model 110 depends on characteristics of the first rock structure 50 such as but not limited to the type of rock, depending on the first geomechanical parameter 20 that is to be modeled by the first porosity-based model 110.

The calculation unit 420 calculates first intermediate values 90 of the first geomechanical parameter 20 of the first well 30 using the first porosity-based model 110 and the first input data 70.

The calculation unit 420 further comprises a second porosity-based model 115, which models the relation between a second geomechanical parameter 25, the first geomechanical parameter 20 and the first well parameters 80 for the first rock structure 50. The second porosity-based model 115 can, for example, be used to calculate the pore pressure along the well trajectory due depth of the first well 30 depending on the overburden stress, the bulk density and sonic compression and sonic shear along the well trajectory due depth of the first well 30. The second porosity-based model 115 calculates the pore pressure for a certain depth using methods such as, but not limited to Equivalent depth Method, Ratio method, Eaton's Method, Eaton's Method, Effective Stress Method (Bowers Method). The second porosity-based model 115 depends on characteristics of the first rock structure 50 such as but not limited to the type of rock, depending on the first geomechanical parameter 20 that is to be modeled by the second porosity-based model 115.

An optimizer unit 430 is connected to the calculation unit 420 and to the data acquisition unit 410. The optimizer unit 430 can communicate with and exchange data with the calculation unit 420 and the data acquisition unit 410. The optimizer unit 430 can obtain the first intermediate values 90 from the calculation unit 420 and the first input data 70, the fourth input data 76 and the fifth input data 78 from the data acquisition unit 410.

The optimizer unit 430 builds a first prediction model 120 using the fourth input data 76 and first machine learning algorithms 130 such as, but not limited to regression algorithms. Commonly known python libraries such as, but not limited to *scikit-learn* (see https://scikit-learn.org/stable/) are used for implementing the regression algorithms. The regression algorithms are based on ensembled modeling technique, predominantly random forest regression models as well as gradient boosting model for the modeling procedure. This allows the handling of high variance in the input data as well as to model non-linear relationships between the first geomechanical parameter 20 and the first well parameters 80. Individual trees of random forest model are CART (Classification and Regression Trees) based using sum of squared losses as a splitting criterion and cost complexity pruning as a stopping criterion. The random forest models are fed with the fourth input data 76 along with calculated engineering features such as moving averages, standard deviations, and lag variables of the first input data 70. 60% of the fourth input data 76 were used for training of the first prediction model 120, 20% were used for evaluation and 20% were used for testing purposes. Parameters of the first prediction model 120 such as but not limited to the number of trees and the minimum points in leaf nodes were iteratively adapted by using extensive grid search algorithms and by looping over the evaluation part of the fourth input data 76. Regularization algorithms were performed and the parameters of the first prediction model 120 were finetuned to overcome overfitting of the models on the training part of the fourth input data 76 to balance the bias variance tradeoffs. Commonly known python libraries such as, but not limited to *scikit-learn* (see https://scikit-learn.org/stable/) are used for implementing the extensive grid search algorithms and regularization algorithms.

The optimizer unit 430 can determine first final values 10 of the first geomechanical parameter 20 of the first well 30 from the first intermediate values 90 and the first input data 70 using the first prediction model 120.

A correction unit 440 is connected to the optimizer unit 430 and to the data acquisition unit 410. The correction unit 440 can communicate with and exchange data with the optimizer unit 430 and the data acquisition unit 410. The correction unit 440 can obtain the first final values 10 from the optimizer unit 430 and the third input data 74 from the data acquisition unit 410.

The data correction unit 440 can determine first corrected final values 12 of the first geomechanical parameter 20 of the first well 30 from the first final values 10 and the third input data 74 using algorithms such as, but not limited to least square method as well as linear and nonlinear convex optimization algorithms. Commonly known python libraries such as, but not limited to *scipy* (see https://scipy.org/) are used for implementing the least square method as well as linear and nonlinear convex optimization algorithms.

The calculation unit 420 can further calculate second intermediate values 95 of the second geomechanical parameter 25 of the first well 30 using the second porosity-based model 115, the first corrected final values 12 and the first input data 70.

A second prediction model 125 is built by the optimizer unit 430 using the fifth input data 78 and second machine learning algorithms 135 such as, but not limited to regression algorithms. The regression algorithms are based on ensembled modeling technique, predominantly random forest regression models as well as gradient boosting model for the modeling procedure. This allows the handling of high variance in the input data as well as to model non-linear relationships between the second geomechanical parameter 25, the first well parameters 80 and the first geomechanical parameter 20. Individual trees of random forest model are CART (Classification and Regression Trees) based using sum of squared losses as a splitting criterion and cost complexity pruning as a stopping criterion. The random forest models are fed with the fifth input data 78 along with calculated engineering features such as moving averages, standard deviations, and lag variables of the second input data 72. 60% of the fifth input data 76 were used for training of the second prediction model 125, 20% were used for evaluation and 20% were used for testing purposes. Parameters of the second prediction model 125 such as but not limited to the number of trees and the minimum points in leaf nodes were iteratively adapted by using extensive grid search algorithms and by looping over the evaluation part of the fifth input data 78. Regularization algorithms were performed and the parameters of the second prediction model 125 were finetuned to overcome overfitting of the models on the training part of the fifth input data 78 to balance the bias variance tradeoffs.

The optimizer unit 430 can determine second final values 15 of the second geomechanical parameter 25 of the first well 30 from the second intermediate values 95 and the first input data 70 using the second prediction model 125.

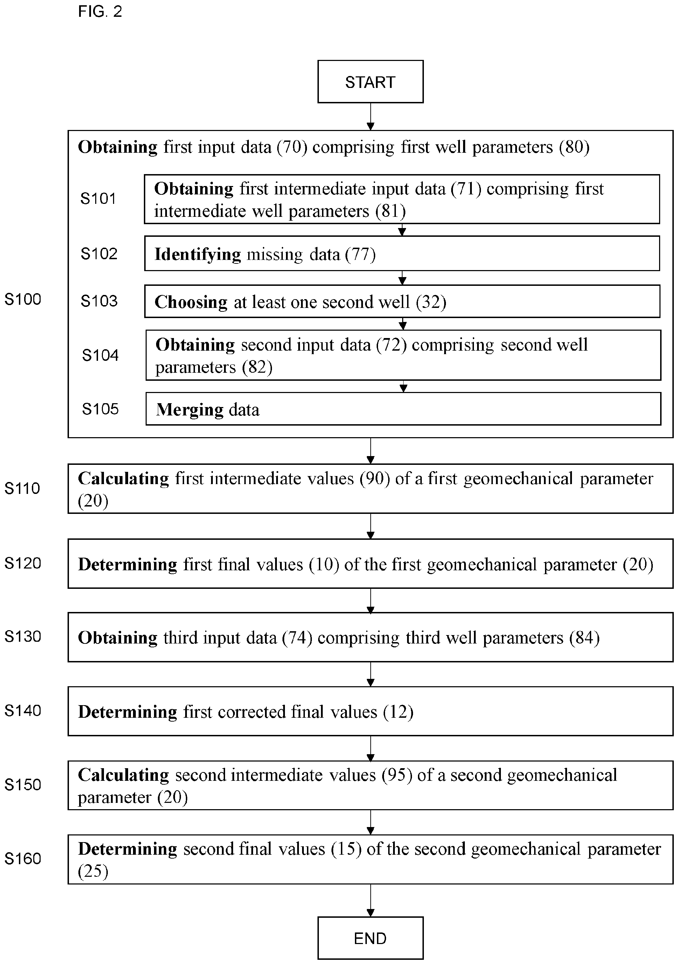

FIG. 2 shows a flow chart describing a first aspect of a method for determining geomechanical parameters of a well. The same reference signs are used for similar features shown in Fig. 2 as those in Fig. 1. The first input data 70 is obtained from the database 400 via the data acquisition unit 410 in step S100. If parts of the first input data 70 are missing or are not usable due to noise, this incomplete first input data 70 is obtained as the first intermediate input data 71 in step S101. Data which is necessary for subsequent calculation S110 of the first intermediate values 90 and/or determination S120 of the first final values 10 and which is missing or not usable in the first intermediate input data 71 is identified in step S102. The missing data 77 shall now be replaced with data from a suitable substitute well.

The second well 32 is chosen from a plurality of wells, of which data is stored in the database 400 in step S103. For choosing the suitable second well 32, similarity measures (cosine similarity) are used. The similarity measures are run to parameters such as, but not limited to the distance between the first well 30 and the second well 32, geological and petrophysical parameters of the first rock structure 50 and the second rock structure 52 and the first well properties 40 of the first well 30 and second well properties 42 of the second well 32. A high dot product indicates more common features, thus a higher similarity. More than one suitable second wells 32 can be chosen or proposed to a user of the system instead of choosing only one second well 32.

The missing data 77 can alternatively be predicted using machine learning algorithms such as but not limited to generalized linear models, ensembled learning algorithms and deep learning model with recurrent frameworks. Commonly known python libraries such as, but not limited to *scikit-learn* (see https://scikit-learn.org/stable/) are used for implementing the generalized linear models, ensembled learning algorithms and deep learning model with recurrent frameworks.

The second input data 72 is obtained for the chosen second well 32 in step S104. The first intermediate input data 71 is merged with selected parts of the second input data 72 to replace the missing data 77. The merged dataset includes now all the data which is necessary for the subsequent calculation S110 of the first intermediate values 90 and/or the determination S120 of the first final values 10. The merged dataset is hereinafter referred to as the first input data 70.

The first intermediate values 90 of the first geomechanical parameter 20 of the first well 30 are calculated in step S110 from the first input data 70 using the first porosity-based model 110. According to this aspect of the invention, the first intermediate values 90 of overburden stress of the first well 30 are calculated from the bulk density data using the first porosity-based model 110 which models the relation between the overburden stress and the bulk density.

Missing bulk density data can be calculated from the sonic logs (containing sonic compression and sonic shear), porosity logs (containing neutron porosity) using a physics-based model before using the bulk density data to calculate overburden stress. Regression / Time Series based machine learning algorithms can alternatively be used for calculating missing bulk density data. Regression algorithms can find dependencies between two sets of continuous values. A trained regression model can act as a function to transfer one distribution of continuous values into another distribution of continuous values. If there is a set of data points with measured density and porosity, for example, a model that transfers density into porosity can be trained. The model can be applied to other density samples to estimate their porosity, if the model is trained sufficiently. The first input data 70 is initially passed through particle filters to remove ambient noise for the machine learning algorithms for the prediction of bulk density data. Further engineered features are developed to pose the depth index data in the regression framework. Some of the engineered features include moving average, standard deviations, exponential smoothing averages trend level at various window level. Further other input information such as reservoir type (carbonate), well type (oil, gas), formation information, geological and petrophysical parameters are also included. Lithology, sedimentological facies, or resistivity are non-limiting examples for this other input information.

The first final values 10 of the first geomechanical parameter 20 of the first well 30 are determined from the first intermediate values 90 and the first input data 70 using the first prediction model 120 in step S120. The calculated first intermediate values 90 of overburden stress of the first well 30 are used as a feature in the machine-learning based first prediction model 120 to determine the first final values 10 of overburden stress for the first well 30 according to this aspect of the invention.

The first final values 10 could already be used for further calculations. Further enhancement of the accuracy of the first final values 10 is described in the following, in case more accurate determination of the first geomechanical parameter 20 is required.

The third input data 74 is obtained and is used in step S140 to determine the first corrected final values 12 of the first geomechanical parameter 20 of the first well from the first final values 10 and the third input data 74 in step S130. The first input data 72 containing overburden stress data measured at specific depths of the first well 30 are used for automated calibration of the determined first final values 10 of overburden stress of the first well 30 using least square method as well as linear and nonlinear convex optimization algorithms for precise curve fitting. Commonly known python libraries such as, but not limited to *scikit-learn* (see https://scikit-learn.org/stable/) or *scipy* (see https://scipy.org/) are used for implementing the least square method as well as linear and nonlinear convex optimization algorithms for precise curve fitting. The determined first corrected final values 12 are more accurate than the first final values 10.

The calculated overburden stress of the first well 30 can be used to calculate the pore pressure as the second geomechanical parameter 20. The second intermediate values 95 of the second geomechanical parameter 25 of the first well 30 are calculated using the second porosity-based model 115, the first input data 70 and the first corrected final values 12 in step S150. If no correction of the first final values 10 was conducted in steps S130 and S140, the first final values 10 instead of the first corrected final values 12 can be used to calculate the second intermediate values 95 of the second geomechanical parameter 25 of the first well 30. The pore pressure along the well trajectory due depth of the first well 30 is calculated from the calculated and corrected overburden stress, the bulk density and the sonic compression and sonic shear along the well trajectory due depth of the first well 30 using the second porosity-based model 115. The bulk density, the sonic compression and the sonic shear are part of the first input data 70.

The second final values 15 of the second geomechanical parameter 25 of the first well 30 are determined from the second intermediate values 95 and the first input data 70 using the second prediction model 125 in step S160. The calculated second intermediate values 95 of pore pressure along the well trajectory due depth of the first well 30 are used as a feature in the machine-learning based second prediction model 125 to determine the second final values 15 of pore pressure for the first well 30 according to this aspect of the invention.

The fracture gradient of the first well 30 is another geomechanical parameter of interest. The fracture gradient of the first well 30 can be calculated using the first corrected final values 12 of overburden stress and the second final values 15 of pore pressure that have been determined in steps S140 and S160 as input data.

Existing physics-based models for the fracture gradient are first estimated for data-driven estimation of fracture gradient. The physics-based model calculates the fracture gradient for a certain depth using methods such as, but not limited to Eaton's Method, Diane's Method, Zamora Method, Matthews, and Kelly method. These values are further used as engineered features alongside other input features to estimate the fracture gradient in a machine learning regression framework. Additional geological (lithology, facies, depositional environment) or petrophysical (permeability, resistivity, saturation) features are non-limiting examples for these other input features. The combination of physics-based models and machine learning algorithms leads to more precise values for fracture gradient. Downhole test data like leakoff test, extended leakoff tests or other logging tests conducted at specific depth are used for automated calibration of the calculated/predicted values of fracture gradient. Linear and nonlinear least square optimization algorithms are invoked for precise curve fitting for this calibration.

The dynamic and static elastic properties of the first rock structure 50 at the first well 30 can further be determined. Dynamic Youngs modulus, shear modulus, bulk modulus and Poisson's ratio are calculated from the well logs using physics-based models. Parameters such as, but not limiting to, bulk density logs, compressional wave transit time (DTC) or shear wave transit time (DTS) can be used from the well logs. The physics-based models for calculating dynamic Youngs modulus, shear modulus, bulk modulus and Poisson's ratio can be based on the following formulas:

$$G_{dyn} = 13474.45 \frac{\rho_b}{(\Delta t_s)^2}$$

$$K_{dyn} = 13474.45 \frac{\rho_b}{(\Delta t_c)^2} - \frac{4}{3} G_{dyn}$$

$$E_{dyn} = \frac{9 G_{dyn} K_{dyn}}{G_{dyn} + 3 K_{dyn}}$$

$$v_{dyn} = \frac{3 K_{dyn} - 2 G_{dyn}}{6 K_{dyn} + 2 G_{dyn}}$$

Where is the bulk density in g/cm$^3$
$\Delta t_s$ the shear wave slowness in $\mu$s/ft
$\Delta t_c$ the compressional wave slowness in $\mu$s/ft
$G_{dyn}$ the dynamic Shear Modulus in Mpsi
$K_{dyn}$ the dynamic Bulk Modulus in Mpsi
$E_{dyn}$ the dynamic Young's Modulus in Mpsi
$v_{dyn}$ the dynamic Poisson's Ratio
13474.45 a conversion factor

The raw data logs are passed through particle filters such as, but not limited to, standard deviation filtering or mean rolling window smoothing to remove ambient noise condition. The values for Dynamic Youngs modulus, shear modulus, bulk modulus and Poisson ratio that have been determined using the physics-based models are used as features in a machine learning regression framework. Other statistical features are further developed to pose the depth index data in the regression framework. Some of the statistical features include moving average standard deviations, exponential smoothing averages trend level at various window level. Further other input information such as reservoir type (carbonate), well type (oil, gas), formation information's, geological and petrophysical features are also included. Existing physics-based models for static elastic properties such as static Young's modulus and Poisson's ration are further estimated. These values are used as engineered features alongside other features such as, but not limited to, moving average standard deviations, exponential smoothing averages trend level at various window level to estimate elastic properties stress in machine learning regression algorithms. The algorithms such as, but not limited to, generalized linear models, ensembled learning algorithms and deep learning model with recurrent frameworks are used. In this way more precise values for static elastic properties can be determined by accommodating not only the physics-based model, but also incorporating finer features from the geological and petrophysical domain. If there are core test data for dynamic and static elastic parameters available from the core samples testing in lab facilities at respective depths or any other pre-recorded results of the same for the first rock structure 50, such values are used for automated calibration of the calculated/ predicted values of the static elastic properties using linear and nonlinear least square optimization algorithms for precise curve fitting.

The determined values for the static elastic properties of the first well 30 in the first rock structure 50 can be further used to determine rock strength parameters, such as the angle of internal friction, unconfined compressive strength, and tensile strength. The raw data such as, but not limited to, Young Modulus static, poisson modulus static, compressional slowness, bulk density, neutron porosity or core calibration points is initially passed through particle filters to remove ambient noise condition for inputting to machine learning algorithms for estimation of rock strength, namely unconfined compressive strength (UCS), tensile strength and angle of internal friction. The rock strength parameters are at first estimated using existing physics-based models. Models such as, but not limited to, as described in Chang, C., Zoback, M.D., & Khaksar, A. (2006). Empirical relations between rock strength and physical properties in sedimentary rocks. Journal of Petroleum Science and Engineering, 51, 223-237 can be used for estimating the unconfined compressive strength in sandstone rock formations. Models such as, but not limited to, as described in Horsrud, P. (2001). Estimating Mechanical Properties of Shale From Empirical Correlations. Spe Drilling & Completion, 16, 68-73 or Lashkaripour, G.R., Dusseault, M.B. (1993). Probabilistic methods in geotechnical engineering. CRC Press can be used for estimating the unconfined compressive strength in shale rock formations. Models such as, but not limited to, as described in Weingarten, J.S., & Perkins, T.K. (1995). Prediction of Sand Production in Gas Wells: Methods and Gulf of Mexico Case Studies. Journal of Petroleum Technology, 47, 596-600 can be used for estimating the angle of internal friction. The estimated values are further used as engineered features alongside other input features to estimate the rock strength parameters using machine learning regression algorithms. Some of the machine learning algorithms used are generalized linear models, ensembled learning algorithms and deep learning model with recurrent frameworks. Accommodating not only the physics-based model, but also incorporating finer engineered features from the geological and petrophysical domain allows the determination of more precise values for the rock strength parameters. Further engineered features are developed to pose the depth index data in the regression framework. Some of the engineered features include moving average, standard deviations, exponential smoothing averages trend level at various window level. Further other input information such as reservoir type (carbonate), well type (oil, gas), formation information's, geological and petrophysical features are also included. Additional geological (lithology, facies, depositional environment) or petrophysical (permeability, resistivity, saturation) features are non-limiting examples of the geological and petrophysical features used as other input information. Values for unconfined compressive strength, tensile strength and angle of internal friction from core samples at respective depths or any other pre-recorded results of the same for the first rock structure 50 are used for automated calibration of the determined values of unconfined compressive strength, tensile strength and angle of internal friction using linear and nonlinear least square optimization algorithms for precise curve fitting.

The determined values for pore pressure, overburden stress, static elastic parameters and rock strength parameters can further be used to determine the minimum horizontal stresses that occur in the first well 30. The raw data, such as, but not limited to overburden stress, pore pressure, poisson's ratio, tensile strength, unconfined compressive strength, dry bulk modulus, fracture closure pressure, fracture breakdown pressure, angle of internal friction, delta temperature, poisson ratio fast, poisson ratio slow or breakout width is initially passed through particle filters to remove ambient noise condition for inputting to machine learning algorithms for determination of minimum horizontal stresses. The minimum horizontal stresses are at first determined using physics-based models for minimum horizontal stresses such as, but not limited to, Mohr-Coulomb Stress model and Poro-Elastic Model. The estimated values are further used as engineered features alongside other input features to estimate minimum horizontal stresses using machine learning regression algorithms such as but not limited to generalized linear models, ensembled learning algorithms and deep learning model with recurrent frameworks. Accommodating not only the physics-based model, but also incorporating finer engineered features from the geological and petrophysical domain enables the determination of more precise values for minimum horizontal stresses. Further engineered features are developed to pose the depth index data in the regression framework. Some of the engineered features include moving average, standard deviations, exponential smoothing averages, trend level at various window level etc. Further input information such as reservoir type (carbonate), well type (oil, gas), formation information, geological and petrophysical features are also included. If there are downhole test data available, like fracture breakdown pressure, fracture closure pressures from extended leakoff tests or other logging tests conducted at specific depth of the first well 30, such values are used for automated calibration of the determined values of minimum horizontal stresses using linear and nonlinear least square optimization algorithms for precise curve fitting.

The determined values for minimum horizontal stresses alongside the determined values for the pore pressure, the overburden stress, the static elastic parameters, and the rock strength parameters can further be used to determine the maximum horizontal stresses that occur in the first well 30. Principal stress orientations are further necessary for the determination of maximum horizontal stresses. Principal stress orientations are calculated from breakout features derived from borehole images such as dynamic and static borehole images that have been taken by methods such as, but not limited to, micro-resistivity and acoustic imaging. Breakout features are automatically picked from the borehole images using image-based deep learning semantic segmentation for characterizing their width, dip, and azimuth and thus the stress orientation. The result of such an analysis will be made available automatically for estimation of maximum horizontal stress. The raw data is initially passed through particle filters to remove ambient noise condition for inputting to machine learning algorithms for determination of maximum horizontal stresses. The maximum horizontal stresses are at first determined using physics-based models for maximum horizontal stresses such as but not limited to Mohr-Coulomb Stress model and Poro-Elastic Model.

The estimated values are further used as engineered features alongside other input features to estimate maximum horizontal stresses using machine learning regression algorithms such as, but not limited to, generalized linear models, ensembled learning algorithms and deep learning model with recurrent frameworks. Accommodating not only the physics-based model, but also incorporating finer engineered features from the geological and petrophysical domain enables the determination of more precise values for minimum horizontal stresses. Further engineered features are developed to pose the depth index data in the regression framework. Some of the engineered features include moving average, standard deviations, exponential smoothing averages, trend level at various window level etc. Further other input information such as reservoir type (carbonate), well type (oil, gas), formation information, geological and petrophysical features are also included. If there are downhole test data available like fracture breakdown pressure, fracture closure pressures from extended leakoff tests or other logging tests conducted at specific depth of the first well 30, such values are used for automated calibration of the determined values of minimum horizontal stresses using linear and nonlinear least square optimization algorithms for precise curve fitting.

Reference numerals

| | |
|---|---|
| 10 | first final values |
| 12 | first corrected final values |
| 15 | second final values |
| 20 | first geomechanical parameter |
| 25 | second geomechanical parameter |
| 30 | first well |
| 32 | second well |
| 40 | first well properties |
| 42 | second well properties |
| 50 | first rock structure |
| 52 | second rock structure |
| 70 | first input data |
| 71 | first intermediate input data |
| 72 | second input data |
| 74 | third input data |
| 76 | fourth input data |
| 77 | missing data |
| 78 | fifth input data |
| 80 | first well parameters |
| 80 | first intermediate well parameters |
| 82 | second well parameters |
| 84 | third well parameters |
| 90 | first intermediate values |
| 95 | second intermediate values |
| 100 | first tool module |
| 102 | second tool module |
| 104 | third tool module |
| 110 | first porosity-based model |
| 115 | second porosity-based model |
| 120 | first prediction model |
| 125 | second prediction model |
| 130 | first machine learning algorithms |
| 135 | second machine learning algorithms |
| 140 | first measurement system |
| 141 | first WITSML server |
| 142 | second measurement system |
| 143 | second WITSML server |

144 third measurement system
145 third WITSML server
150 first data delivery system
152 second data delivery system
154 third data delivery system
300 data and quality control center
310 data parsing module
320 data standardization module
330 data retrieval module
400 database
410 data acquisition unit
420 calculation unit
430 optimizer unit
440 correction unit

S100 obtaining first input data
S101 obtaining first intermediate input data
S102 identifying missing data
S103 choosing a suitable second well
S104 obtaining second input data
S105 merging input data
S110 calculating first intermediate values
S120 determining first final values
S130 obtaining third input data
S140 determining first corrected final values
S150 calculating second intermediate values
S160 determining second final values

**Claims**

1. A computer-implemented method for determining first final values (10) of a first geomechanical parameter (20) of a first well (30) in a first rock structure (50), the method comprising the steps of:

   obtaining (S100) first input data (70) from a database (400), the first input data (70) generated, at the first well (30), by at least one first tool module (100), the first input data (70) comprising first well parameters (80) of the first well (30); calculating (S110) first intermediate values (90) of the first geomechanical parameter (20) of the first well (30) using a first porosity-based model (110) and the first input data (70); and determining (S120) the first final values (10) of the first geomechanical parameter (20) of the first well (30) from the first intermediate values (90) and the first input data (70) using a first prediction model (120);
   **characterized in that** obtaining (S100) the first input data (70) comprises the steps of:

   obtaining (S101) first intermediate input data (71) from the database (400), the first intermediate input data (71) generated, at the first well (30), by at least one first tool module (100), the first intermediate input data (71) comprising first intermediate well parameters (81) of the first well (30);
identifying (S102) missing data (77) which is missing in the first intermediate input data (77), and which is necessary for calculating (S110) the first intermediate values (90) and/or determining (S120) the first final values (10);
choosing (S103) at least one second well (32) from a plurality of wells stored in the database (400);
obtaining (S104) second input data (72) from the database (400), the second input data (72) generated, at the at least one second well (32), by at least one second tool module (102), the second input data (72) comprising second well parameters (82) of the at least one second well (32); and
merging (S105) the first intermediate input data (71) with parts of the second input data (72) that correspond to the missing data (77) to gain the first input data (70) with the first well parameters (80).

2. The computer-implemented method according to claim 1, wherein the first prediction model (120) is built using first machine learning algorithms (130) and fourth input data (76), the fourth input data (76) comprising geological and/or petrophysical parameters.

3. The computer-implemented method according to claim 1, wherein the at least one second well (32) is located in the first rock structure (50) or in a second rock structure (52).

4. The computer-implemented method according to any preceding claims, wherein the step of choosing (SI03) the at least one second well (32) considers at least one of the distances between the first well (30) and the at least one second well (32), geological parameters of the first rock structure (50) and of the second rock structure (52), first well properties (40) of the first well (30) and second well properties (42) of the at least one second well (32).

5. The computer-implemented method according to any one of the above claims, further comprising the steps of:

   obtaining (S130) third input data (74) from the database (400), the third input data (74) generated, at the first well (30), by at least one third tool module (104), the third input data (74) comprising third well parameters (84) of the first well (30); and
   determining (S140) first corrected final values (12) of the first geomechanical parameter (20)

of the first well (30) from the first final values (10) and the third input data (74).

6. The computer-implemented method according to any one of the above claims, further comprising the steps of:

    calculating (S150) second intermediate values (95) of a second geomechanical parameter (25) of the first well (30) using a second porosity-based model (115), the first input data (70) and the first final values (10) or the first corrected final values (12); and
    determining (S160) second final values (15) of the second geomechanical parameter (25) of the first well (30) from the second intermediate values (95) and the first input data (70) using a second prediction model (125).

7. The computer-implemented method according to claim 6, wherein the second prediction model (125) is built using second machine learning algorithms (135) and fifth input data (78), the fifth input data (78) comprising geological and/or petrophysical parameters.

8. The computer-implemented method according to any one of the above claims, when dependent on the claim 4, wherein the first well properties (40) and the second well properties (42) are at least one of vertical depth, dog-legged severity, azimuth and below mudline depth along the well trajectory.

9. The computer-implemented method according to any one of the above claims, wherein the first well parameters (80) and the second well parameters (82) are at least one of bulk density, caliper, resistivity, neutron porosity, compression slowness, shear slowness, young's modulus, compressive strength, poisson ratio, fracture breakdown pressure and fracture closure pressure.

10. The computer-implemented method according to any one of the above claims, wherein the first geomechanical parameter (20) and the second geomechanical parameter (25) of the first well (30) are one of overburden stress, pore pressure, fracture gradient, elastic properties, strength, and horizontal stresses.

11. The computer-implemented method according to any one of the above claims, wherein the first input data (70) and the second input data (72) are derived from one of well log data generated during drilling and analysis of borehole cores.

12. The computer-implemented method according to any one of the above claims, when dependent on the claim 2 and/or the claim 7, wherein the first machine learning algorithms (130) and the second machine learning algorithms (135) comprise regression algorithms.

13. The computer-implemented method according to any one of the above claims, when dependent on the claim 5, wherein the step of determining (S150) first corrected final values (12) comprises at least one of least square optimization as well as linear and nonlinear convex optimization.

14. A system for determining first final values (10) of a first geomechanical parameter (20) of a first well (30) in a first rock structure (50), the system comprising means for carrying out the computer-implemented method of any of claims 1 to 13.

**Patentansprüche**

1. Computerimplementiertes Verfahren zum Bestimmen erster Endwerte (10) eines ersten geomechanischen Parameters (20) eines ersten Bohrlochs (30) in einer ersten Gesteinsstruktur (50), wobei das Verfahren die folgenden Schritte umfasst:

    Erhalten (S100) erster Eingabedaten (70) aus einer Datenbank (400), wobei die ersten Eingabedaten (70) an dem ersten Bohrloch (30) durch mindestens ein erstes Werkzeugmodul (100) erzeugt werden, wobei die ersten Eingabedaten (70) erste Bohrlochparameter (80) des ersten Bohrlochs (30) umfassen;
    Berechnen (S110) erster Zwischenwerte (90) des ersten geomechanischen Parameters (20) des ersten Bohrlochs (30) unter Verwendung eines ersten porositätsbasierten Modells (110) und der ersten Eingabedaten (70); und
    Bestimmen (S120) der ersten Endwerte (10) des ersten geomechanischen Parameters (20) des ersten Bohrlochs (30) aus den ersten Zwischenwerten (90) und den ersten Eingabedaten (70) unter Verwendung eines ersten Vorhersagemodells (120);
    **dadurch gekennzeichnet, dass** Erhalten (S100) der ersten Eingabedaten (70) die folgenden Schritte umfasst:

    Erhalten (S101) erster Zwischeneingabedaten (71) aus der Datenbank (400), wobei die ersten Zwischeneingabedaten (71) an dem ersten Bohrloch (30) durch mindestens ein erstes Werkzeugmodul (100) erzeugt werden, wobei die ersten Zwischeneingabedaten (71) erste Zwischenbohrlochparameter (81) des ersten Bohrlochs (30) umfassen;

Identifizieren (S102) fehlender Daten (77), die in den ersten Zwischeneingabedaten (77) fehlen und die zum Berechnen (S110) der ersten Zwischenwerte (90) und/oder Bestimmen (S120) der ersten Endwerte (10) notwendig sind;

Auswählen (S103) mindestens eines zweiten Bohrlochs (32) aus einer Vielzahl von in der Datenbank (400) gespeicherten Bohrlöchern;

Erhalten (S104) zweiter Eingabedaten (72) aus der Datenbank (400), wobei die zweiten Eingabedaten (72) an dem mindestens einen zweiten Bohrloch (32) durch mindestens ein zweites Werkzeugmodul (102) erzeugt werden, wobei die zweiten Eingabedaten (72) zweite Bohrlochparameter (82) des mindestens einen zweiten Bohrlochs (32) umfassen; und

Zusammenführen (S105) der ersten Zwischeneingabedaten (71) mit Teilen der zweiten Eingabedaten (72), die den fehlenden Daten (77) entsprechen, um die ersten Eingabedaten (70) mit den ersten Bohrlochparametern (80) zu erhalten.

2. Computerimplementiertes Verfahren nach Anspruch 1, wobei das erste Vorhersagemodell (120) unter Verwendung erster maschineller Lernalgorithmen (130) und vierter Eingabedaten (76) erstellt wird, wobei die vierten Eingabedaten (76) geologische und/oder petrophysikalische Parameter umfassen.

3. Computerimplementiertes Verfahren nach Anspruch 1, wobei sich das mindestens eine zweite Bohrloch (32) in der ersten Gesteinsstruktur (50) oder in einer zweiten Gesteinsstruktur (52) befindet.

4. Computerimplementiertes Verfahren nach einem der vorhergehenden Ansprüche, wobei der Schritt des Auswählens (S103) des mindestens einen zweiten Bohrlochs (32) mindestens einen der Abstände zwischen dem ersten Bohrloch (30) und dem mindestens einen zweiten Bohrloch (32), geologische Parameter der ersten Gesteinsstruktur (50) und der zweiten Gesteinsstruktur (52), erste Bohrlocheigenschaften (40) des ersten Bohrlochs (30) und zweite Bohrlocheigenschaften (42) des mindestens einen zweiten Bohrlochs (32) berücksichtigt.

5. Computerimplementiertes Verfahren nach einem der vorhergehenden Ansprüche, ferner umfassend die folgenden Schritte:

Erhalten (S130) dritter Eingabedaten (74) aus der Datenbank (400), wobei die dritten Eingabedaten (74) an dem ersten Bohrloch (30) durch mindestens ein drittes Werkzeugmodul (104) erzeugt werden, wobei die dritten Eingabedaten (74) dritte Bohrlochparameter (84) des ersten Bohrlochs (30) umfassen; und

Bestimmen (S140) erster korrigierter Endwerte (12) des ersten geomechanischen Parameters (20) des ersten Bohrlochs (30) aus den ersten Endwerten (10) und den dritten Eingabedaten (74).

6. Computerimplementiertes Verfahren nach einem der vorhergehenden Ansprüche, ferner umfassend die folgenden Schritte:

Berechnen (S150) zweiter Zwischenwerte (95) eines zweiten geomechanischen Parameters (25) des ersten Bohrlochs (30) unter Verwendung eines zweiten porositätsbasierten Modells (115), der ersten Eingabedaten (70) und der ersten Endwerte (10) oder der ersten korrigierten Endwerte (12); und

Bestimmen (S160) zweiter Endwerte (15) des zweiten geomechanischen Parameters (25) des ersten Bohrlochs (30) aus den zweiten Zwischenwerten (95) und den ersten Eingabedaten (70) unter Verwendung eines zweiten Vorhersagemodells (125).

7. Computerimplementiertes Verfahren nach Anspruch 6, wobei das zweite Vorhersagemodell (125) unter Verwendung zweiter maschineller Lernalgorithmen (135) und fünfter Eingabedaten (78) erstellt wird, wobei die fünften Eingabedaten (78) geologische und/oder petrophysikalische Parameter umfassen.

8. Computerimplementiertes Verfahren nach einem der vorhergehenden Ansprüche wenn abhängig von Anspruch 4, wobei die ersten Bohrlocheigenschaften (40) und die zweiten Bohrlocheigenschaften (42) mindestens eine der folgenden Eigenschaften sind: vertikale Tiefe, Dogleg-Severity, Azimut und Tiefe unter der Schlammlinie entlang der Bohrlochtrajektorie.

9. Computerimplementiertes Verfahren nach einem der vorhergehenden Ansprüche, wobei die ersten Bohrlochparameter (80) und die zweiten Bohrlochparameter (82) mindestens eine der folgenden Eigenschaften sind: Schüttdichte, Dicke, Resistivität, Neutronenporosität, Kompressionslangsamkeit, Scherlangsamkeit, Young-Modul, Druckfestigkeit, Poisson-Verhältnis, Bruchabbaudruck und Bruchverschlussdruck.

10. Computerimplementiertes Verfahren nach einem der vorhergehenden Ansprüche, wobei der erste geomechanische Parameter (20) und der zweite geomechanische Parameter (25) des ersten Bohrlochs (30) eine der folgenden Eigenschaften sind: Überlastspannung, Porendruck, Bruchgradient, elastische Eigenschaften, Festigkeit und horizontale Spannungen.

11. Computerimplementiertes Verfahren nach einem der vorhergehenden Ansprüche, wobei die ersten Eingabedaten (70) und die zweiten Eingabedaten (72) aus Bohrlochprotokolldaten, die während des Bohrens und der Analyse von Bohrlochkernen erzeugt werden, abgeleitet werden.

12. Computerimplementiertes Verfahren nach einem der vorhergehenden Ansprüche, wenn abhängig von Anspruch 2 und/oder 7, wobei die ersten maschinellen Lernalgorithmen (130) und die zweiten maschinellen Lernalgorithmen (135) Regressionsalgorithmen umfassen.

13. Computerimplementiertes Verfahren nach einem der vorhergehenden Ansprüche, wenn abhängig von Anspruch 5, wobei der Schritt des Bestimmens (S150) erster korrigierter Endwerte (12) eine Optimierung der kleinsten Quadrate und/oder eine lineare und/oder nichtlineare konvexe Optimierung umfasst.

14. System zum Bestimmen erster Endwerte (10) eines ersten geomechanischen Parameters (20) eines ersten Bohrlochs (30) in einer ersten Gesteinsstruktur (50), wobei das System Mittel zum Ausführen des computerimplementierten Verfahrens nach einem der Ansprüche 1 bis 13 umfasst.

**Revendications**

1. Un procédé mis en oeuvre par calculateur pour déterminer des premières valeurs finales (10) d'un premier paramètre géomécanique (20) d'un premier puits dans une première structure rocheuse (50), le procédé comprenant les étapes suivantes :

   l'obtention (S100) de premières données d'entrée (70) à partir d'une base de données (400), les premières données d'entrée (70) étant générées, au niveau du premier puits (30), par au moins un premier module outil (100), les premières données d'entrée (70) comprenant des premiers paramètres de puits (80) du premier puits (30) ;
   le calcul (S110) de premières valeurs intermédiaires (90) du premier paramètre géomécanique (20) du premier puits (30), à l'aide d'un premier modèle basé sur la porosité (110) et des premières données d'entrée (70) ; et
   la détermination (S120) des premières valeurs finales (10) du premier paramètre géomécanique (20) du premier puits (30) à partir des premières valeurs intermédiaires (90) et des premières données d'entrée (70), à l'aide d'un premier modèle de prédiction (120) ;
   **caractérisé en ce que** l'obtention (S100) des premières données d'entrée (70) comprend les étapes suivantes :

   l'obtention (S101) de premières données d'entrée intermédiaires (71) à partir de la base de données (400), les premières données d'entrée intermédiaires (71) étant générées, au niveau du premier puits (30), par au moins un premier module outil (100), les premières données d'entrée intermédiaires (71) comprenant des premiers paramètres de puits intermédiaires (81) du premier puits (30) ;
   l'identification (S102) de données manquantes (77), qui manquent parmi les premières données d'entrée intermédiaires (71) et qui sont nécessaires pour calculer (S110) les premières valeurs intermédiaires (90) et/ou déterminer (S120) des premières valeurs finales (10) ;
   le choix (S103) d'au moins un second puits (32) parmi une pluralité de puits stockés dans la base de données (400) ;
   l'obtention (S104) de secondes données d'entrée (72) à partir de la base de données (400), les secondes données d'entrée (72) étant générées, au niveau de l'au moins un second puits (32), par au moins un second module outil (102), les secondes données d'entrée (72) comprenant des seconds paramètres de puits (82) de l'au moins un second puits (32) ; et
   la fusion (S105) des premières données d'entrée intermédiaires (71) avec des parties des secondes données d'entrée (72) qui correspondent aux données manquantes (77), pour obtenir les premières données d'entrée (70) avec les premiers paramètres de puits (80).

2. Le procédé mis en oeuvre par calculateur selon la revendication 1, dans lequel le premier modèle de prédiction (120) est construit à l'aide de premiers algorithmes d'apprentissage machine (130) et de quatrièmes données d'entrée (76), les quatrièmes données d'entrée (76) comprenant des paramètres géologiques et/ou pétrophysiques.

3. Le procédé mis en oeuvre par calculateur selon la revendication 1, dans lequel l'au moins un second puits (32) est situé dans la première structure rocheuse (50) ou dans une seconde structure rocheuse (52).

**4.** Le procédé mis en oeuvre par calculateur selon l'une des revendications précédentes, dans lequel l'étape de choix (S103) de l'au moins un second puits (32) considère au moins l'un d'entre les distances entre le premier puits (30) et l'au moins un second puits (32), des paramètres géologiques de la première structure rocheuse (50) et de la seconde structure rocheuse (52), des premières propriétés de puits (40) du premier puits (30) et des secondes propriétés de puits (42) de l'au moins un second puits (32).

**5.** Le procédé mis en oeuvre par calculateur selon l'une des revendications ci-dessus, comprenant en outre les étapes suivantes :

l'obtention (S130) de troisièmes données d'entrée (74) à partir de la base de données (400), les troisièmes données d'entrée (74) étant générées, au niveau du premier puits (30), par au moins un troisième module outil (104), les troisièmes données d'entrée (74) comprenant des troisièmes paramètres de puits (84) du premier puits (30) ; et

la détermination (S140) de premières valeurs finales corrigées (12) du premier paramètre géomécanique (20) du premier puits (30) à partir des premières valeurs finales (10) et des troisièmes données d'entrée (74).

**6.** Le procédé mis en oeuvre par calculateur selon l'une des revendications ci-dessus, comprenant en outre les étapes suivantes :

le calcul (S150) de secondes valeurs intermédiaires (95) d'un second paramètre géomécanique (25) du premier puits (30), à l'aide d'un second modèle basé sur la porosité (115), des premières données d'entrée (70) et des premières valeurs finales (10) ou des premières valeurs finales corrigées (12) ; et

la détermination (S160) de secondes valeurs finales (15) du second paramètre géomécanique (25) du premier puits (30) à partir des secondes valeurs intermédiaires (95) et des premières données d'entrée (70), à l'aide d'un second modèle de prédiction.

**7.** Le procédé mis en oeuvre par calculateur selon la revendication 6, dans lequel le second modèle de prédiction (125) est construit à l'aide de seconds algorithmes d'apprentissage machine (135) et des cinquièmes données d'entrée (78), les cinquièmes données d'entrée (78) comprenant des paramètres géologiques et/ou pétrophysiques.

**8.** Le procédé mis en oeuvre par calculateur selon l'une des revendications ci-dessus prise en dépendance de la revendication 4, dans lequel les premières propriétés de puits (40) et les secondes propriétés de puits (42) sont au moins l'une d'entre la profondeur verticale, la variation angulaire du profil du puits, l'azimut, et la profondeur au-dessous de la ligne de boue le long de la trajectoire du puits.

**9.** Le procédé mis en oeuvre par calculateur selon l'une des revendications ci-dessus, dans lequel les premiers paramètres de puits (80) et les seconds paramètres de puits (82) sont au moins l'un d'entre la densité en vrac, le diamétrage, la résistivité, la porosité aux neutrons, la lenteur de compression, la lenteur au cisaillement, le module d'Young, la résistance à l'écrasement, le coefficient de Poisson, la pression de rupture de fracturation et la pression de fermeture de fracturation.

**10.** Le procédé mis en oeuvre par calculateur selon l'une des revendications ci-dessus, dans lequel le premier paramètre géomécanique (20) et le second paramètre géomécanique (25) du premier puits (30) sont l'un d'entre la contrainte de couverture, la pression interstitielle, le gradient de fracturation, des propriétés élastiques, la résistance, et des contraintes horizontales.

**11.** Le procédé mis en oeuvre par calculateur selon l'une des revendications ci-dessus, dans lequel les premières données d'entrée (70) et les secondes données d'entrée (72) sont dérivées de l'un d'entre des données de diagraphie générées pendant le forage et une analyse de carottes de sondage.

**12.** Le procédé mis en oeuvre par calculateur selon l'une des revendications ci-dessus prise en dépendance de la revendication 2 et/ou de la revendication 7, dans lequel les premiers algorithmes d'apprentissage machine (130) et les seconds algorithmes d'apprentissage machine (135) comprennent des algorithmes régressifs.

**13.** Le procédé mis en oeuvre par calculateur mis en oeuvre par calculateur selon l'une des revendications ci-dessus prise en dépendance de la revendication 5, dans lequel l'étape de détermination (S150) de premières valeurs finales corrigées (12) comprend au moins l'une d'entre une optimisation par les moindres carrés et une optimisation convexe aussi bien linéaire que non linéaire.

**14.** Un système pour déterminer des premières valeurs finales (10) d'un premier paramètre géomécanique (20) d'un premier puits (30) dans une première structure rocheuse (50), le système comprenant des moyens pour mettre en oeuvre le procédé mis en oeuvre par calculateur de l'une des revendications 1 à 13.

FIG. 1

FIG. 2

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2020065365 A1
- US 2019266501 A1
- US 2021041596 A1
- US 2007294034 A1

**Non-patent literature cited in the description**

- **IHAB F. ILYAS ; XU CHU.** Data Cleaning. ACM Books, 2019
- **CHANG, C ; ZOBACK, M.D. ; KHAKSAR, A.** Empirical relations between rock strength and physical properties in sedimentary rocks. *Journal of Petroleum Science and Engineering,* 2006, vol. 51, 223-237
- **HORSRUD, P.** Estimating Mechanical Properties of Shale From Empirical Correlations. *Spe Drilling & Completion,* 2001, vol. 16, 68-73
- **LASHKARIPOUR, G.R. ; DUSSEAULT, M.B.** Probabilistic methods in geotechnical engineering. CRC Press, 1993
- **WEINGARTEN, J.S. ; PERKINS, T.K.** Prediction of Sand Production in Gas Wells: Methods and Gulf of Mexico Case Studies. *Journal of Petroleum Technology,* 1995, vol. 47, 596-600